# EUROPEAN PATENT APPLICATION

(11) **EP 0 980 105 A1**
(43) Date of publication of application: **16.02.2000**
(21) Application number: 99306342.9
(22) Date of filing: 11.08.1999
(51) Int. Cl.: H01M 2/02, H01M 10/40

(54) **Magnetically compatible electrochemical cell**

(30) Priority: 11.08.1998 US 132634
(71) Applicant: WILSON GREATBATCH LTD., Clarence New York 14031 (US)
(72) Inventor: Takeuchi, Esther S., East Amherst, New York 14051 (US)
(74) Representative: Colmer, Stephen Gary

(57) **Abstract**

An electrochemical cell that is useful in the vicinity of the strong magnetic fields of a magnetic resonance imaging machine is described. The cell can be a primary or a secondary system having lithium as an anode active material. A preferred couple is Li/CFₓ housed in a titanium casing with a titanium internal cell components.

## Description

### BACKGROUND OF THE INVENTION

### 1. Field of the Invention

The present invention generally relates to the conversion of chemical energy to electrical energy and, more particularly, to an electrochemical cell that is useful in the vicinity of the strong magnetic fields of a magnetic resonance imaging machine.

### 2. Prior Art

With the ever increasing use of magnetic resonance scanning to aid medical personnel during pre- and post-clinical and surgical procedures, there exists a need for a wide variety of medical devices constructed of materials that have as low a magnetic susceptibility as possible. Many of these medical devices require a portable source of electrical energy, such as an electrochemical cell, that is constructed of materials which are compatible with body fluids, compatible with solutions used in surgery, e.g., saline, betadine and others, exhibit stability and durability during autoclave, provide a magnetic signature sufficient to generate an artifact of the same size and shape as the battery, provide a magnetic signature such that image distortion is prevented and provide a magnetic signature such that deflection of the instrument powered by the battery in the presence of the MRI magnet is precluded. The electrochemical cell of the present invention fulfills this need.

### SUMMARY OF THE INVENTION

The electrochemical cell of the present invention is housed inside of a casing having a very low magnetic signature. All internal components of the battery also have very low magnetic signatures. This is accomplished by constructing the cell having a casing and internal, non-active components having a magnetic susceptibility of about 182 x 10⁶ or less. The cell can be of both a primary and a secondary chemistry. A preferred electrochemical couple is a lithium/carbon monofluoride cell housed inside of a titanium casing and provided with titanium internal components.

These and other aspects of the present invention will become more apparent to those skilled in the art by reference to the following description.

### DETAILED DESCRIPTION OF THE INVENTION

The anode of a low magnetic susceptibility cell according to the present invention is of a metal selected from Groups IA, IIA or IIIB of the Periodic Table of the Elements, including the alkali metals lithium, sodium, potassium, etc., and their alloys and intermetallic compounds including, for example, Li-Si, Li-Al, Li-B and Li-Si-B alloys and intermetallic compounds. The preferred anode comprises lithium, and the more preferred anode comprises a lithium alloy such as a lithium-aluminum alloy. However, the greater the amount of aluminum present by weight in the alloy, the lower the-energy density of the cell.

The form of the anode may vary, but preferably the anode is a thin metal sheet or foil of the anode metal, pressed or rolled on a metallic anode current collector, i.e., preferably comprising titanium, to form an anode component. In the exemplary cell of the present invention, the anode component has an extended tab or lead of the same material as the anode current collector, i.e., preferably titanium, integrally formed therewith such as by welding and contacted by a weld to a cell case of conductive metal in a case-negative electrical configuration. Alternatively, the anode may be formed in some other geometry, such as a bobbin shape, cylinder or pellet to allow an alternate low surface cell design.

The cathode of the present low magnetic susceptibility cell is preferably of carbonaceous materials such as graphite, carbon and fluorinated carbon. Such carbonaceous materials are useful in both liquid depolarizer and solid cathode primary cells and in rechargeable, secondary cells. The cathode of the present cell more preferably comprises a fluorinated carbon represented by the formula (CFₓ)ₙ wherein x varies between about 0.1 to 1.9 and preferably between about 0.5 and 1.2 and (C₂F)ₙ wherein the n refers to the member of monomer units which can vary widely. These electrode active materials are composed of carbon and fluorine, and include graphitic and nongraphitic forms of carbon, such as coke, charcoal or activated carbon.

Other cathode active materials useful for constructing a low magnetic susceptibility cell according to the present invention are selected from a metal, a metal oxide, a metal sulfide or a mixed metal oxide. Such electrode active materials include silver vanadium oxide, copper silver vanadium oxide, manganese dioxide, titanium disulfide, copper oxide, copper sulfide, iron sulfide, iron disulfide, cobalt oxide, nickel oxide, copper vanadium oxide, and'other materials typically used in alkali metal electrochemical cells.

In secondary cells, the cathode preferably comprises a lithiated material that is stable in air and readily handled. Examples of such air-stable lithiated cathode materials include oxides, sulfides, selenides, and tellurides of such metals as vanadium, titanium, chromium, copper, molybdenum, niobium, iron, nickel, cobalt and manganese. The more preferred oxides include LiNiO₂, LiMn₂O₄, LiCoO₂, LiCo_{0.92}Sn_{0.08}O₂ and LiCo₁₋ₓNiₓO₂.

To discharge such secondary cells, the lithium metal comprising the cathode is intercalated into a carbonaceous anode by applying an externally generated electrical potential to recharge the cell. The applied recharging electrical potential serves to draw the alkali metal from the cathode material, through the electrolyte and into the carbonaceous anode to saturate the carbon comprising the anode. The cell is then provided with an electrical potential and is discharged in a normal manner.

An alternate secondary cell construction comprises intercalating the carbonaceous material with the active alkali material before the anode is incorporated into the cell. In this case, the cathode body can be solid and comprise, but not be limited to, such materials as manganese dioxide, silver vanadium oxide, titanium disulfide, copper oxide, copper sulfide, iron sulfide, iron disulfide and fluorinated carbon. However, this approach is comprised by the problems associated with handling lithiated carbon outside of the cell. Lithiated carbon tends to react when contacted by air or water.

The cathode electrode for a primary or a secondary cell is prepared by mixing about 80 to about 99 weight percent of an already prepared electrode active material in a finely divided form with up to about 10 weight percent of a binder material, preferably a thermoplastic polymeric binder material. The term thermoplastic polymeric binder material is used in its broad sense and any polymeric material, preferably in a powdered form, which is inert in the cell and which passes through a thermoplastic state, whether or not it finally sets or cures, is included within the meaning "thermoplastic polymer". Representative materials include polyethylene, polypropylene and fluoropolymers such as fluorinated ethylene and propylene, polyvinylidene fluoride (PVDF) and polytetrafluoroethylene (PTFE), the latter material being most preferred. Natural rubbers are also useful as the binder material with the present invention.

In the case of a primary, solid cathode electrochemical cell, the cathode active material is further combined with up to about 5 weight percent of a discharge promoter diluent such as acetylene black, carbon black and/or graphite. A preferred carbonaceous diluent is Ketjenblack® carbon. Metallic powders such as nickel, aluminum, titanium and stainless steel in powder form are also useful as conductive diluents.

Similarly, if the active material is a carbonaceous counterelectrode in a secondary cell, the electrode material preferably includes a conductive diluent and a binder material in a similar manner as the previously described primary, solid cathode electrochemical cell.

Cathodes prepared as described above are flexible and may be in the form of one or more plates operatively associated with at least one or more plates of anode material, or in the form of a strip wound with a corresponding strip of anode material in a structure similar to a "jellyroll".

Whether the cell is constructed as a primary or secondary electrochemical system, the cell of the present invention includes a separator to provide physical segregation between the anode and cathode electrodes. The separator is of electrically insulative material, and the separator material also is chemically unreactive with and insoluble in the electrolyte. In addition, the separator material has a degree of porosity sufficient to allow flow therethrough of the electrolyte during the electrochemical reaction of the cell. Illustrative separator materials include fabrics woven from fluoropolymeric fibers of polyethylenetetrafluoroethylene and polyethylenechlorotrifluoroethylene used either alone or laminated with a fluoropolymeric microporous film. Other suitable separator materials include non-woven glass, polypropylene, polyethylene, glass fiber materials, ceramics, a polytetrafluoroethylene membrane commercially available under the designation ZITEX (Chemplast Inc.), a polypropylene membrane commercially available under the designation CELGARD (Celanese Plastic Company, Inc.) and a membrane commercially available under the designation DEXIGLAS (C.H. Dexter, Div., Dexter Corp.).

The electrochemical cell of the present invention further includes a nonaqueous, ionically conductive electrolyte which serves as a medium for migration of ions between the anode and the cathode electrodes during the electrochemical reactions of the cell. The electrochemical reaction at the electrodes involves conversion of ions in atomic or molecular forms which migrate from the anode to the cathode. Thus, nonaqueous electrolytes suitable for the present invention are substantially inert to the anode and cathode materials, and they exhibit those physical properties necessary for ionic transport, namely, low viscosity, low surface tension and wettability.

Suitable nonaqueous electrolyte solutions that are useful in both the present primary and secondary cells having an electrode couple of alkali metal or an alkali metal-containing material, and a solid active material counterelectrode preferably comprise a combination of a lithium salt and an organic solvent system. More preferably, the electrolyte includes an ionizable alkali metal salt dissolved in an aprotic organic solvent or a mixture of solvents comprising a low viscosity solvent and a high permittivity solvent. The inorganic, ionically conductive salt serves as the vehicle for migration of the alkali metal ions to intercalate into the counterelectrode. Preferably, the ion-forming alkali metal salt is similar to the alkali metal comprising the anode active material. Suitable salts include LiPF₆, LiBF₄, LiAsF₆, LiSbF₆, LiClo₄, LiAlCl₄, LiGaCl₄, LiC(SO₂CF₃)₃, LiO₂, LiN(SO₂CF₃)₂, LiSCN, LiO₃SCF₂CF₃, LiC₆F₅SO₃, LiO₂CCF₃, LiSO₃F, LiB(C₆H₅)₄ and LiCF₃SO₃, and mixtures thereof. Suitable salt concentrations typically range between about 0.8 to 1.5 molar.

In electrochemical systems having a solid cathode or in secondary cells, the nonaqueous solvent system comprises low viscosity solvents including tetrahydrofuran (THF), methyl acetate (MA), diglyme, trigylme, tetragylme, dimethyl carbonate (DMC), ethylmethyl carbonate (EMC), 1,2-dimethoxyethane (DME), diisopropylether, 1,2-diethoxyethane, 1-ethoxy,2-methoxyethane, dipropyl carbonate, ethylmethyl carbonate, methylpropyl carbonate, ethylpropyl carbonate and diethyl carbonate, and mixtures thereof. While not necessary, the electrolyte also preferably includes a high permittivity solvent selected from cyclic carbonates, cylic esters and cyclic amides such as propylene carbonate (PC), ethylene carbonate (EC), butylene carbonate, acetonitrile, dimethyl sulfoxide, dimethyl formamide, dimethyl acetamide, γ-butyrolactone (GBL), γ-valerolactone and N-methyl-pyrrolidinone (NMP), and mixtures thereof. For a solid cathode primary or secondary cell having lithium as the anode active material, the preferred electrolyte is LiAsF₆ in a 50:50, by volume, mixture of PC/DME. For a Li/CFₓ cell, the preferred electrolyte is 1.0M to 1.4M LiBF₄ in γ-butyrolactone (GBL).

The preferred form of a primary alkali metal/solid cathode electrochemical cell is a case-negative design wherein the anode is in contact with a conductive metal casing and the cathode contacted to the current collector is the positive terminal. In a secondary electrochemical cell having a case-negative configuration, the anode (counterelectrode)/cathode couple is inserted into the conductive metal casing such that the casing is connected to the carbonaceous counterelectrode current collector, and the lithiated material is contacted to a second current collector, which also preferably is of titanium. In either case, the current collector for the lithiated material or the cathode electrode is in contact with the positive terminal pin via a lead of the same material as the current collector which is welded to both the current collector and the positive terminal pin for electrical contact.

A preferred material for the casing is titanium although thermoplastic, composites and ceramics are also suitable. The casing header comprises a metallic lid having an opening to accommodate the glass-to-metal seal/terminal pin feedthrough for the cathode electrode. The anode electrode or counterelectrode is preferably connected to the case or the lid. An additional opening is provided for electrolyte filling. The casing header comprises elements having compatibility with the other components of the electrochemical cell and is resistant to corrosion. The cell is thereafter filled with the electrolyte solution described hereinabove and hermetically sealed such as by close-welding a titanium plug over the fill hole, but not limited thereto. The cell of the present invention can also be constructed in a case-positive design.

In accordance with the stated low magnetic susceptibility characteristics of the electrochemical cell of the present invention, Table 1 lists the magnetic susceptibilities of the various materials used to construct the cell along with selected other materials.

**TABLE 1**

| Material | Density (g/cc) | Atomic or Molecular Weight | Susceptibility (x 10⁶) |
|---|---|---|---|
| Carbon (polycrystalline graphite) | 2.26 | 12.011 | -218 |
| Gold | 19.32 | 196.97 | -34 |
| Beryllium | 1.85 | 9.012 | -24 |
| Silver | 10.50 | 107.87 | -24 |
| Carbon (diamond) | 3.513 | 12.011 | -21.8 |
| Zinc | 7.13 | 65.39 | -15.7 |
| Copper | 8.92 | 63.546 | -9.63 |
| Water (37°C) | 1.00 | 18.015 | -9.03 |
| Human Soft Tissues | ~1.00- 1.05 | - | ~(-11.0 to -7.0) |
| Air (NTP) | 0.00129 | 28.97 | +0.36 |
| Titanium | 4.54 | 47.88 | 182 |
| Chromium | 7.19 | 51.996 | 320 |
| Stainless Steel (nonmagnetic, austenitic) | 8.0 | - | 3520-6700 |

In contrast, Table 2 lists the magnetic susceptibilities of various relatively highly magnetic materials.

**TABLE 2**

| Material | Density (g/cc) | Atomic or Molecular Weight | Susceptibility |
|---|---|---|---|
| Nickel | 8.9 | 58.69 | 600 |
| Stainless Steel (magnetic, martensitic) | 7.8 | - | 400-1100 |
| Iron | 7.874 | 55.847 | 200,000 |

The data used to construct Tables 1 and 2 was obtained from a paper authored by John Schneck of General Electric Corporate Research and Development Center, Schenectady, New York 12309, entitled "The Role of Magnetic Susceptibility In Magnetic Resonance Imaging: Magnetic Field Compatibility of the First and Second Kinds". The disclosure of that paper is incorporated herein by reference.

Accordingly, the present electrochemical cell is useful for powering a wide variety of medical devices including pacemakers, neurostimulators, implantable drug pumps and cardiac defibrillators. That way, a patient who may require one of these devices to live is not precluded from having the benefits of magnetic resonance imaging procedures to sustain an acceptable quality of life.

It is appreciated that various modifications to the inventive concepts described herein may be apparent to those of ordinary skill in the art without departing from the spirit and scope of the present invention as defined by the appended claims.

## Claims

1. An electrochemical cell which comprises:
a) an anode of a Group IA, IIA, or IIIB metal, or an alloy or intermetallic compound thereof;
b) a cathode of a cathode active material that is capable of intercalation or insertion of the alkali metal;
c) an electrolyte activating the anode and the cathode; and
d) a casing housing the anode and the cathode, wherein the casing is of a material having a magnetic susceptibility of 182 x 10⁶ or less.

2. The electrochemical cell of Claim 1 wherein the casing is selected from the group consisting of titanium, thermoplastics, composites, ceramics, and mixtures thereof.

3. The electrochemical cell of Claim 1 or Claim 2 wherein the cathode active material is selected from the group consisting of silver vanadium oxide, copper silver vanadium oxide, manganese dioxide, titanium disulfide, copper oxide, copper sulfide, iron sulfide, iron disulfide, cobalt oxide, nickel oxide, copper vanadium oxide, fluorinated carbon, and mixtures thereof.

4. The electrochemical cell of any of the preceding claims provided in a case-negative design wherein the anode contacts the casing of titanium as the negative terminal and the cathode active material is contacted to a titanium current collector in electrical continuity with a titanium terminal pin.

5. The electrochemical cell of any of the preceding claims wherein the alkali metal is lithium.

6. The electrochemical cell of any of the preceding claims wherein the electrolyte includes a first solvent selected from the group consisting of tetrahydrofuran, methyl acetate, diglyme, triglyme, tetraglyme, dimethyl carbonate, ethylmethyl carbonate, 1,2-dimethoxyethane, diisopropylether, 1,2-diethoxyethane, 1-ethoxy,2-methoxyethane, dipropyl carbonate, ethylmethyl carbonate, methylpropyl carbonate, ethylpropyl carbonate and diethyl carbonate, and mixtures thereof.

7. The electrochemical cell of Claim 6 wherein the electrolyte includes a second solvent selected from the group consisting of propylene carbonate, ethylene carbonate, butylene carbonate, acetonitrile, dimethyl sulfoxide, dimethyl formamide, dimethyl acetamide, γ-butyrolactone, γ-valerolactone and N-methyl-pyrrolidinone, and mixtures thereof.

8. The electrochemical cell of any of the preceding claims wherein the electrolyte includes an alkali metal salt selected from the group consisting of LiPF₆, LiBF₄, LiAsF₆, LiSbF₆, LiClO₄, LiAlCl₄, LiGaCl₄, LiO₂, LiC(SO₂CF₃)₃, LiN(SO₂CF₃)₂, LiSCN, LiO₃SCF₂CF₃, LiC₆F₅SO₃, Li₂O₂CF₃, LiSO₃F, LiB(C₆H₅)₄ and LiCF₃SO₃, and mixtures thereof.

9. The electrochemical cell of any of the preceding claims wherein the anode is lithium and the cathode active material is fluorinated carbon activated with 1.0M to 1.4M LiBF₄ in γ-butyrolactone.

10. The electrochemical cell of any of the preceding claims as a secondary cell having a carbonaceous anode and a cathode active material selected from the group consisting of LiNiO₂, LiMn₂O₄, LiCoO₂, LiCo_{0.92}Sn_{0.08}O₂ and LiCo₁₋ₓNiₓO₂, and mixtures thereof.

11. The electrochemical cell of Claim 10 wherein the electrolyte comprises 1M LiAsF₆ in a 50:50 mixture, by volume, of propylene carbonate and 1,2-dimethoxyethane.

12. A method for providing the electrochemical cell of any one of Claims 5 to 11 comprising the steps of:
a) providing an anode of an alkali metal and an associated cathode of a cathode active material that is capable of intercalating or inserting the alkali metal;
b) housing the anode and the cathode in a casing of a material having a magnetic susceptibility of about 182 x 10⁶ or less; and
c) activating the anode and the cathode with an electrolyte hermetically sealed inside the casing.

13. The method of Claim 12 including providing the casing of titanium.

14. The method of Claim 12 including providing the cell in a case-negative design wherein the anode contacts the casing of titanium as the negative terminal and the cathode active material is contacted to a titanium current collector in electrical continuity with a titanium terminal pin.
